# EUROPEAN PATENT APPLICATION

(11) **EP 4 823 116 A1**
(43) Date of publication of application: **14.10.2026**
(21) Application number: 25913935.0
(22) Date of filing: 28.08.2025
(51) Int. Cl.: H04R 1/32, H04R 3/00, G06N 20/00, H04R 19/04

(54) **META-STRUCTURE FOR IMPROVING ACOUSTIC DIRECTIVITY, AND SYSTEM COMPRISING SAME**

(30) Priority: 24.01.2025 KR 20250011376; 23.04.2025 KR 20250053249
(71) Applicant: Seoul National University R&DB Foundation, Seoul 08826 (KR)
(72) Inventor: AHN, Sung Hoon, Seoul 08826 (KR); AHN, Se Min, Seoul 08826 (KR)
(74) Representative: TRBL Intellectual Property
(86) International application number: PCT/KR2025/013156
(87) International publication number: WO 2026/160554

(57) **Abstract**

In one aspect of the present invention, a meta-structure for improving acoustic directivity is proposed. The meta-structure, as a structure for improving acoustic directivity, comprises a tubular structure having an internal hollow formed therein and extended in length in one direction, wherein the tubular structure has slots formed perpendicular to the longitudinal direction of the tubular structure and opened toward the internal hollow.

## Description

### FIELD OF THE INVENTION

The present invention relates to a tubular meta-structure for improving acoustic directivity and a system comprising an acoustic sensor coupled thereto. Further, the present invention relates to a method of improving acoustic directivity and estimating the direction of sound by using the system.

### BACKGROUND OF THE INVENTION

Acoustic directivity means the ability to selectively detect or enhance sound coming from a specific direction. Today, acoustic directivity is importantly utilized in various fields such as speech recognition, environmental monitoring, robotics, and military security.

Conventional technology for implementing acoustic directivity includes an array method utilizing an arrangement of a plurality of acoustic sensors. The above method has a principle of selectively enhancing sound from a specific direction by arranging a number of acoustic sensors at regular intervals, and suppressing sound from other directions. Such a method has disadvantages in that the overall size of the system is large, and performance is rapidly degraded if the array is not precisely aligned or if the position of some sensors is displaced. In addition, as the number of sensors increases, the cost of the entire system increases, and the complexity of installation also increases.

Another conventional technology for implementing acoustic directivity is a method of estimating the direction of a sound source through mathematical calculation of a signal and selectively receiving only the signal from a desired direction. This method uses mathematical algorithms, and has a limitation that a high-performance computing device is required because it requires a vast amount of computation.

Therefore, there is a need for an acoustic directivity improvement technology and a sound direction estimation technology which are small in size, require less computation, and can robustly and accurately estimate acoustic signals even in environmental noise.

### BRIEF DESCRIPTION OF THE INVENTION

### Technical Problem

The object of the present invention is to solve the above-described problems, and to propose a structure and system for improving acoustic directivity which can reduce size through a miniaturized structure and decrease the amount of computation, in place of the conventional method based on multiple array arrangements of acoustic sensors and mathematical calculation. In addition, it is to propose a method of improving acoustic directivity and estimating direction by using the system.

However, the problems to be solved by the present invention are not limited to those mentioned above, and other problems not mentioned will be clearly understood by those skilled in the art from the description below.

### Technical Solution

In order to solve the above-described problems, a meta-structure for improving acoustic directivity proposed in one aspect of the present invention is a structure for improving acoustic directivity, comprising a tubular structure having an internal hollow formed therein and extended in length in one direction, wherein the tubular structure has slots formed perpendicular to the longitudinal direction of the tubular structure and opened toward the internal hollow.

In one embodiment, the slots are formed in plurality having a pattern, and the plurality of slots may have the same size and length.

In one embodiment, the slots having the same size and length may be formed in plurality on the same circumference of the tube.

In one embodiment, the slots may have a length of 3 to 10 times the width.

In one embodiment, the diameter of the tube may be 1.5 to 3 times the length of the slots.

In one embodiment, the diameter of the tube may be 28 to 36 mm, the number of the slots may be 25 to 40, and the interval between the slots may be 3 to 7 mm.

In another aspect, an acoustic directivity improvement system comprising the meta-structure proposed in the present invention includes: a tubular structure; and an acoustic sensor connected to the tubular structure, wherein the tubular structure has slots formed perpendicular to the longitudinal direction of the tubular structure and opened toward the internal hollow.

In one embodiment, the acoustic sensor may be at least partially inserted into the inside of the tubular structure.

In one embodiment, the system may further include a rotation axis connected to the acoustic sensor, the rotation axis being perpendicular to the longitudinal direction of the tubular structure, and the tubular structure may be rotatable 360° about the rotation axis.

In one embodiment, the acoustic sensor may comprise a single sensor.

In one embodiment, the system may be replaceable with another tubular structure designed to have slots of a different pattern from the previously installed tubular structure.

In one embodiment, the tubular structure may generate a phase cancellation effect in sound having a frequency of 2 kHz or higher.

In still another aspect, an acoustic directivity improvement and direction estimation method proposed in the present invention comprises: rotating an acoustic sensor coupled to a tubular structure having slots formed therein about a rotation axis perpendicular to the longitudinal axis of the tubular structure; analyzing a specific frequency response received by the acoustic sensor according to rotation angles; and setting, in correspondence to the specific frequency, the rotation angle at which the frequency response is maximum as a directivity improvement angle. The tubular structure having the slots formed therein may be the meta-structure.

In one embodiment, the method may further comprise arranging the tubular structure having the slots formed therein and the acoustic sensor at the directivity improvement angle; and canceling interference of frequencies other than the specific frequency by a phase cancellation mechanism.

In one embodiment, the method may further comprise estimating a position of a sound source by using a signal processing algorithm for the acoustic data received by the acoustic sensor according to rotation angles.

In one embodiment, the acoustic data may be human voice, and the signal processing algorithm may be an ASR algorithm.

### Advantageous Effects of Invention

According to one embodiment of the present invention, acoustic directivity can be improved through a phase cancellation mechanism by using a meta-structure having slots formed therein, so that the amount of computation required for signal processing can be effectively reduced as compared with the conventional technology.

In addition, since the system according to the present invention secures directivity through the rotation of a single sensor, miniaturization is possible as compared with the conventional directivity improvement technology of arranging a plurality of sensors, and accordingly, there is an advantage that it can be applied even in dynamic environments.

In addition, according to the embodiments proposed in the present invention, since the theoretically calculated directivity angle and the experimentally measured angle show high consistency, the directivity angle for a desired frequency can be predicted and set in advance, thereby enabling precise direction control without additional calibration processes.

However, the effects of the present invention are not limited to the effects described above, but include all effects naturally realized by the various configurations proposed in the present invention.

### DESCRIPTION OF THE DRAWINGS

FIG. 1 is a view showing a meta-structure according to one embodiment of the present invention.
FIG. 2 is a view showing parameters of the meta-structure.
FIG. 3a is a side photograph of an acoustic directivity improvement system including a meta-structure according to one embodiment of the present invention, and FIG. 3b is a view showing a rotation method of the acoustic directivity improvement system including a meta-structure according to one embodiment of the present invention.
FIGS. 4a and 4b are experimental graphs related to a phase cancellation effect according to parameter changes of the meta-structure according to one embodiment of the present invention.
FIG. 5 is acoustic position tracking experimental data of an acoustic directivity improvement system including a meta-structure according to one embodiment of the present invention.
FIG. 6 is experimental data applied to multi-person sound position tracking by using an acoustic directivity improvement system including a meta-structure according to one embodiment of the present invention.
FIG. 7 is experimental data according to angles of human voice by using an acoustic directivity improvement system including a meta-structure according to one embodiment of the present invention.
FIG. 8 is a view showing experimental directivity angle results measured for various frequencies for an acoustic directivity improvement system including a meta-structure according to one embodiment of the present invention.
FIG. 9a is a view showing theoretical directivity angles compared with the experimental results of FIG. 8 for an acoustic directivity improvement system including a meta-structure according to one embodiment of the present invention, and FIG. 9b is experimental data for confirming the minimum frequency at which directivity characteristic change according to rotation angles is possible in the acoustic directivity improvement system including the meta-structure.
FIG. 10 is a view showing comparison results between a meta-structure based acoustic sensor according to the present invention and a sensor under free-field condition without the structure.
FIG. 11 is a table of experimental results applying an acoustic directivity improvement system including a meta-structure according to one embodiment of the present invention as a hardware bandpass filter.
FIGS. 12 to 14 are embodiment images of various experiments performed by applying an acoustic directivity improvement system including a meta-structure according to one embodiment of the present invention to CNC tool failure monitoring hardware bandpass in a noisy factory environment.
FIG. 15 is an embodiment image of various experiments performed by applying an acoustic directivity improvement system including a meta-structure according to one embodiment of the present invention to hardware bandpass for human speech recognition for Human-Robot interaction and Human-Machine interaction in a noisy environment.

### Numerical references used in the drawings

| | |
|---|---|
| 100 | Meta-structure |
| 200 | Acoustic sensor |
| 110 | Slot |

### DETAILED DESCRIPTION OF THE INVENTION

### Mode for Carrying Out the Invention

The embodiments of the present invention are illustrated for the purpose of explaining the technical idea of the present invention. The scope of rights of the present invention is not limited to the embodiments presented below or the detailed description of these embodiments.

All technical terms and scientific terms used in the present invention, unless otherwise defined, have meanings generally understood by those skilled in the art to which the present invention belongs. All terms used in the present invention are selected for the purpose of more clearly describing the present invention and are not selected to limit the scope of rights of the present invention.

Expressions such as "comprising," "including," and "having" used in the present invention are to be understood as open-ended terms implying the possibility of including other embodiments, unless otherwise mentioned in the phrase or sentence in which the expressions are included.

In the present invention, when a part such as a layer, film, region, or plate is described as being "on" or "above" another part, it includes not only the case where it is "directly on" another part but also the case where another part is interposed therebetween. Conversely, when a part is described as being "directly on" another part, it means that there is no other part in between. In addition, when it is described as being "on" or "above" a reference part, it means being located above or below the reference part, and it does not necessarily mean being located "above" or "on" in the direction opposite to gravity. The same applies to "below" or "under."

In the present invention, "on a plane" means when the subject of the present invention is viewed from above, and "on a cross-section" means when the subject of the present invention is viewed from the side of a cross-section cut vertically to the ground or installation surface. In addition, in the present invention, "front" means the part visible from the front or front side when worn, and "rear" means the side opposite to the "front." In addition, in the present invention, "front side" means the side facing the front in a configuration, and "rear side" means the side facing the rear in the same configuration.

In the present invention, expressions such as "identical" and "the same" indicate not only a strictly identical state but also a state in which there exists tolerance or a difference to the extent that the same function can be obtained.

In the present invention, expressions indicating relative or absolute arrangement such as "in a certain direction," "along a certain direction," "parallel," "perpendicular," "to the center," "concentric," or "coaxial" indicate not only a strictly such arrangement but also a state of being relatively displaced with an angle or distance to the extent that the same function can be obtained.

In the present invention, singular expressions may include plural meanings unless otherwise mentioned, and this is also applicable to singular expressions described in the claims.

Hereinafter, embodiments of the present invention will be described with reference to the accompanying drawings. In this process, the thickness of lines or the size of components shown in the drawings may be exaggerated for clarity and convenience of description. In addition, in the description of the following embodiments, description of the same or corresponding components may be omitted to avoid redundancy. However, even if the description of components is omitted, it is not intended that such components are not included in an embodiment.

Furthermore, the following embodiments are not intended to limit the scope of rights of the present invention but are merely exemplary matters of the components presented in the claims of the present invention, and embodiments including components that are included in the technical idea throughout the specification of the present invention and substitutable as equivalents in the components of the claims are included in the scope of rights of the present invention.

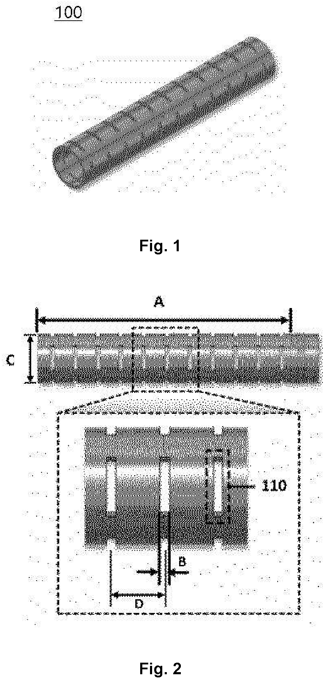

FIG. 1 is a view showing a meta-structure (100) according to one embodiment of the present invention. Referring to FIG. 1, the meta-structure according to one embodiment of the present invention is a structure for improving acoustic directivity, comprising a tubular structure having an internal hollow formed therein and extended in length in one direction, wherein the tubular structure has slots (110) formed perpendicular to the longitudinal direction of the tubular structure and opened toward the internal hollow. In one embodiment, the slots may be formed in plurality with a pattern on the tubular structure. In addition, the plurality of slots may have the same size and length. The slots may function to cause a phase interference phenomenon by making the phase vary depending on the incident direction and incident angle when sound waves are incident into the inside of the tubular structure.

In one embodiment, the slots having the same size and length may be formed in plurality on the same circumference of the tube. As the slots are formed on the same circumference, sound waves incident into the inside from each slot can structurally maintain a constant phase difference, thereby producing a constant phase interference effect. FIG. 2 is a view showing parameters of the meta-structure. A may mean the length of the tube structure, B may mean the width of the slots, C may mean the diameter of the tube, and D may mean the interval between the slots. The distance between the slots may be 1.1 to 12 times the slot width. The diameter of the tube structure may be 7 to 12 times the slot width.

In one embodiment, the diameter of the tube structure may be 22.5 mm to 37.5 mm, and the number of the slots may be 5 to 50. The interval between the slots may be 3.5 mm to 34 mm.

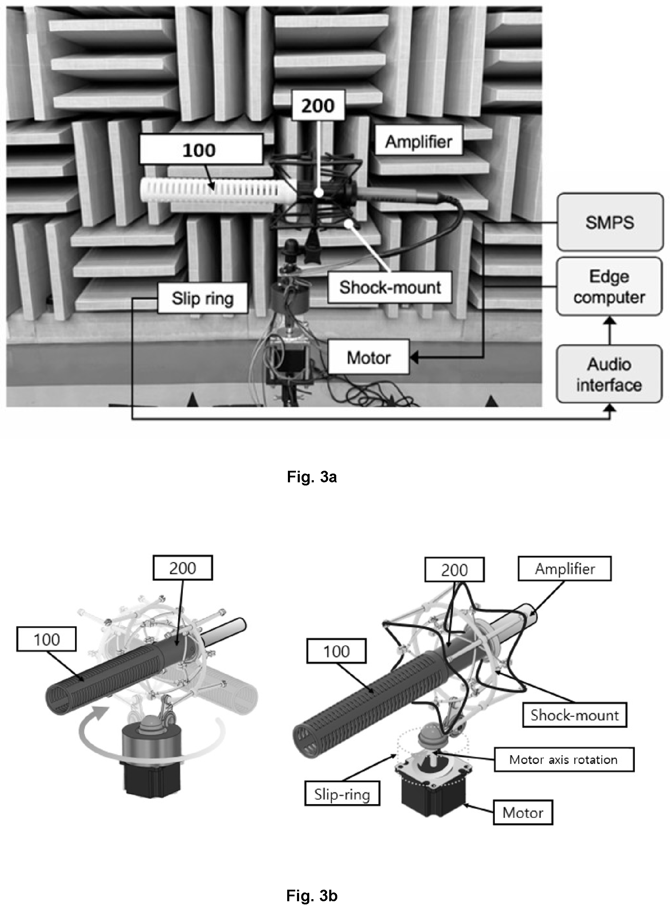

FIG. 3 is a side photograph of an acoustic directivity improvement system including a meta-structure according to one embodiment of the present invention. Referring to FIG. 3, the acoustic directivity improvement system including a meta-structure according to one embodiment of the present invention may include a tubular structure and an acoustic sensor connected to the tubular structure. In addition, the tubular structure may have slots formed perpendicular to the longitudinal direction of the tubular structure and opened toward the internal hollow. According to one embodiment of the present invention, as shown in FIG. 3, not only computation for signal processing and communication of acoustic data, but also execution of physical control commands including rotation operation of the sensor can be directly processed by an edge computer. Through this, low-latency and high-speed response can be achieved without communication with a cloud-based server, and advantages of securing real-time responsiveness to environmental changes and system independence are provided.

In one embodiment, when a sound source is located in the forward direction (0°) of the tubular structure, constructive interference occurs, and the sound can be detected by the acoustic sensor. The forward direction may mean the front of the tubular structure. On the other hand, when the sound source is located in a direction other than the forward direction, destructive interference occurs, and the sound may not be detected. By utilizing such structural characteristics of the tubular structure, it becomes possible to selectively receive only sound incident from a specific direction, thereby effectively improving acoustic directivity.

In one embodiment, the acoustic sensor may be at least partially inserted into the inside of the tubular structure. By inserting at least a portion of the acoustic sensor, acoustic data with improved acoustic directivity can be more efficiently and accurately received. Along with this, clearer acoustic data can be obtained while minimizing the influence of external noise. In another embodiment, a portion of the acoustic sensor may protrude outside the tubular structure. In this case, a rotation axis may be coupled to the exposed portion of the acoustic sensor, thereby securing structural stability during rotation operation of the acoustic sensor. In addition, there is an advantage of enhancing convenience of maintenance.

In one embodiment, the acoustic directivity improvement system may further include a rotation axis connected to the acoustic sensor. The rotation axis may be perpendicular to the longitudinal direction of the tubular structure. The tubular structure may be rotatable 360° about the rotation axis. By the rotation, the acoustic sensor can collect acoustic data in all directions with improved directivity. Accordingly, acoustic data can be measured more precisely.

The acoustic data measured by angles can be classified according to angles by using a signal processing algorithm. In addition, the position of a sound source can be identified based on the classified acoustic data.

The signal processing algorithm may calculate the average value of the average sound pressure level (SPL) of the acoustic data acquired through the meta-structure system from each direction, and may recognize the presence of a sound source in a direction if there is a peak in a specific direction.

The signal processing algorithm according to one embodiment of the present invention may perform calculating the average value of the sound pressure level (SPL) of acoustic data received from each direction through the meta-structure based acoustic sensor, as input. The average value of the sound pressure level may be calculated by converting the root mean square of signals received within a predetermined time interval into a logarithmic scale, and the position of a sound source is determined through comparative analysis for multiple directions. This processing may be performed in real time by the edge computer. In addition, when a relatively high peak value is observed in a specific direction among the calculated average sound pressure levels, the signal processing algorithm may determine that a sound source exists in that direction. This method is performed based on continuous measurement data for multiple directions, and has the advantage of effectively identifying the direction of a specific sound source.

In one embodiment, the acoustic sensor may comprise a single sensor. This may be because the sensor is installed to be rotatable, and can collect acoustic data in all directions through the rotation of the sensor itself. In view of the fact that rotation is possible, unlike the conventional array method requiring a plurality of sensors, the same function can be realized with only a single sensor, thereby providing an advantage that the entire system can be miniaturized. In addition, there is an advantage that maintenance becomes easier due to the reduced structural complexity.

In one embodiment, the system may be replaceable with another tubular structure designed to have slots of a different pattern from the previously installed tubular structure. The slots of the different pattern may be formed by changing parameters of the tubular structure. The parameters may be one of an interval between slots, the number of slots, a diameter of the tubular structure, or a length of the tubular structure. For example, the tubular structure may be of a type in which all frequencies have high directivity at the front of the tubular structure. In another example, the tubular structure may be of a type in which the direction having high directivity differs according to frequencies. In an embodiment to be described later, the inventors of the present invention manufactured and experimented with a first type and a second type of tubular structure. In the case of the first type, the tubular structure was manufactured with 33 slots, a slot interval of 5.23 mm, and a tube diameter of 32.5 mm, and in the case of the second type, the tubular structure was manufactured with 6 slots, a slot interval of 33.52 mm, and a tube diameter of 32.5 mm.

In one embodiment, the tubular structure may generate a phase cancellation effect in sound having a frequency of 1873 Hz or higher. Preferably, the tubular structure may generate a phase cancellation effect in sound having a frequency of 2 kHz to 22 kHz.

An acoustic directivity improvement method according to one embodiment of the present invention may comprise rotating an acoustic sensor coupled to a tubular structure having slots formed therein about a rotation axis perpendicular to the longitudinal axis of the tubular structure, analyzing a specific frequency response received by the acoustic sensor according to rotation angles, and setting, in correspondence to the specific frequency, the rotation angle at which the frequency response is maximum as a directivity improvement angle. The tubular structure having the slots formed therein may be the meta-structure according to one embodiment of the present invention.

In one embodiment, the acoustic directivity improvement system including the meta-structure may be utilized as a hardware band filter or a frequency band amplifier. In order to utilize the system as a hardware bandpass filter, the present invention may additionally provide the following acoustic directivity improvement method. That is, the acoustic directivity improvement method may further comprise arranging the tubular structure having slots formed therein and the acoustic sensor at the directivity improvement angle, and canceling and interfering frequencies other than the specific frequency by a phase cancellation mechanism. Through such a phase cancellation mechanism, the system can perform a function as a hardware bandpass filter. Compared with the conventional bandpass filter technology, since the system is implemented through improvement of hardware structure without using a mathematical calculation method or an electronic circuit method, there is an advantage that it is more robust against environmental noise. In addition, there is an advantage that no power consumption and computational resources are required, and it is more robust against external environmental noise and can be applied in real time. The hardware bandpass filter may change directivity according to frequency through parameter changes of the meta-structure. Accordingly, only sound of a specific frequency can be acquired. Along with this, since the system is rotatable, the target frequency to be band-passed can be changed according to the rotation angle.

In one embodiment, the acoustic directivity improvement system including the meta-structure may be utilized for tracking the position and direction of a sound source. The sound source may mean acoustic sound. In order to estimate the direction of the sound source, the present invention may additionally provide the following acoustic direction estimation method. That is, the acoustic direction estimation method may further comprise estimating the position of the sound source by using a signal processing algorithm for acoustic data received by the acoustic sensor according to rotation angles.

The acoustic data may be human voice, and the signal processing algorithm may be an automatic speech recognition (ASR) algorithm. The automatic speech recognition algorithm may include a pre-trained deep learning-based speech recognition model. The speech recognition algorithm may use OpenAI's Whisper model disclosed as open source.

Accordingly, in a work environment where robots and humans coexist, or in various indoor and outdoor environments, a user can deliver a command through human voice, and the system can recognize the command by analyzing the received acoustic data, thereby controlling the operation of the robot. Since acoustic directivity is improved by the meta-structure, among the omnidirectionally received acoustic data, only the signal enhanced in a specific direction can be effectively detected. Accordingly, the recognition rate of the command voice can be increased. Along with this, even in an environment with environmental noise, the accuracy of receiving the command voice can be improved.

### EXAMPLES

### (Experiment 1) Phase cancellation effect experiment according to parameter variation of the meta-structure

In order to evaluate the directivity performance of the acoustic directivity improvement system including the meta-structure according to one embodiment of the present invention, the inventors of the present invention performed an experiment of analyzing directivity responses by frequency while varying the number of slots, the interval between slots, and the tube diameter.

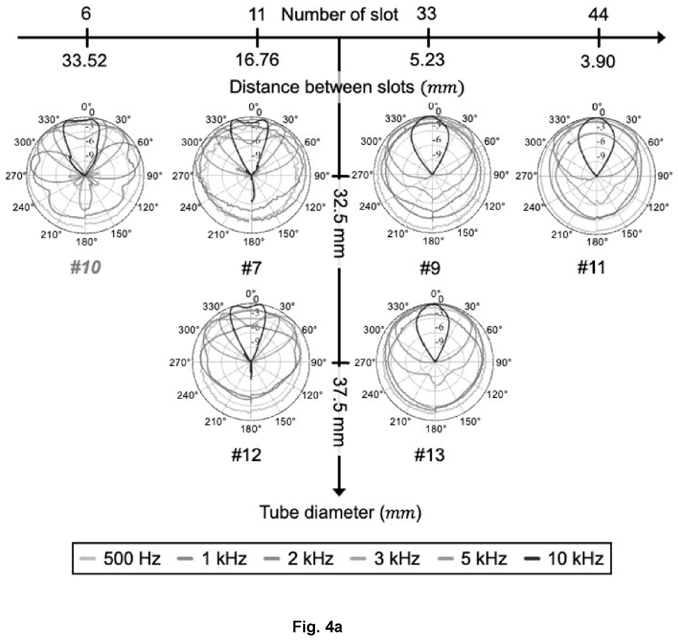

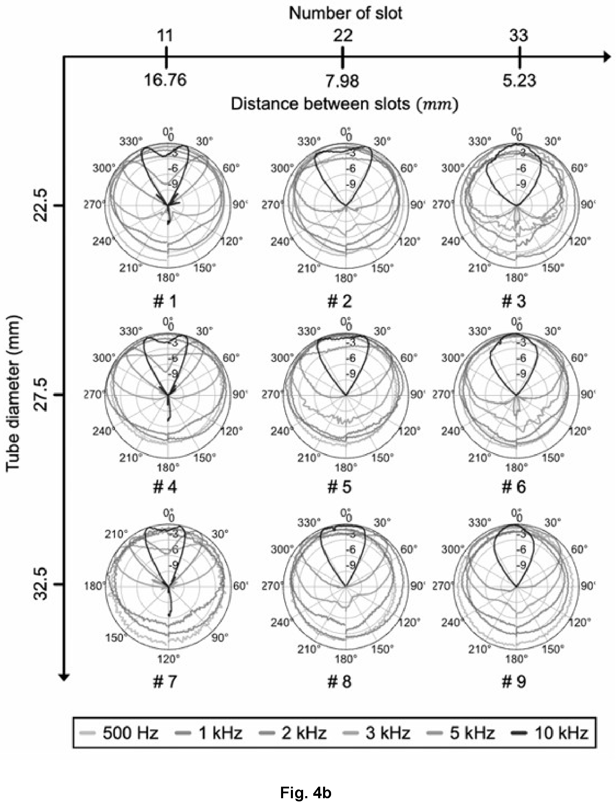

In the experiment, nine tubular structures were used, and for each structure, directivity patterns of pure-tone sound from 500 Hz to 10 kHz at a sound pressure level (SPL) of 94 dB at a distance of 2 m were recorded. FIG. 4 is an experimental graph related to the phase cancellation effect according to parameter variation of the meta-structure. Referring to FIG. 4, directivity patterns by frequency of each structure can be confirmed. With reference to the directivity patterns, it can be effectively determined that, on the premise of the same tube length, the more the number of slots and the narrower the interval between slots, the more effective. In addition, it can be seen that the most effective directivity pattern is obtained when the tube diameter is 32.5 mm.

An effective directivity pattern may mean that the thickness of the main lobe for each frequency is formed narrowly, which may be due to the phase cancellation effect by the directivity improvement system including the meta-structure.

### (Experiment 2) Evaluation experiment of accuracy of multi-sound source position estimation

In order to evaluate whether various sounds that may occur in daily life can be effectively estimated in terms of position even in noisy environments by using the acoustic directivity improvement system according to one embodiment of the present invention, the inventors of the present invention conducted an experiment.

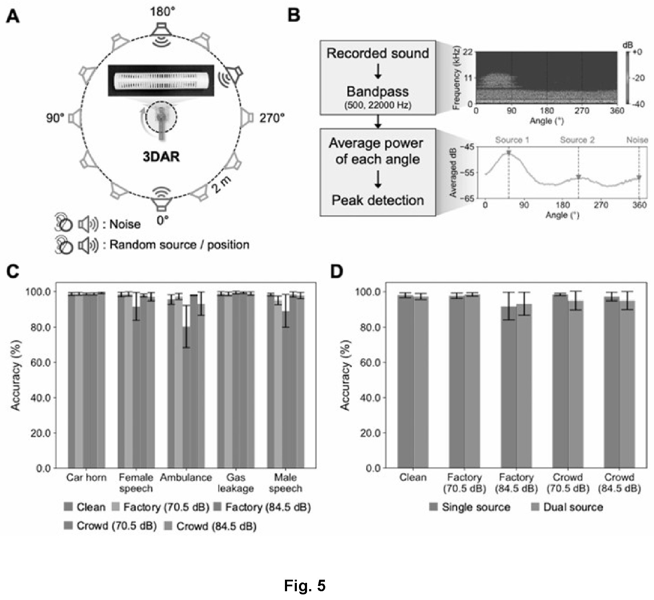

In the experiment, the volume of factory noise and crowd noise was increased from 0 dB up to 84.5 dB, which is the same as the target sound to be estimated, and the position of the target sound was tracked and the corresponding accuracy was determined. FIG. 5 is a diagram showing experimental data according to the above experiment, and illustrates an acoustic position tracking system using a meta-structure and a signal processing algorithm employing 3DAR (3-dimensional acoustic ranging). More specifically, FIG. 5A shows a schematic configuration of the acoustic directivity improvement system for estimating the positions of sound sources such as car horns, human voice (e.g., HELP!), ambulance sirens, gas leakage sound, and screaming, which are sounds that may occur in daily life, even in noisy environments such as factories or crowds. FIG. 5B shows a signal analysis process in which the direction of a sound source can be accurately estimated with only a simple algorithm due to the beamforming characteristics of the meta-structure. FIG. 5C shows accuracy results of estimating the position of a single acoustic stimulus under various noise conditions. FIG. 5D shows accuracy results of estimating the positions of single and multiple acoustic stimuli under various noise conditions.

Referring to FIG. 5, it can be seen that various sound positions were estimated with high accuracy of 90% or more.

Through the proposed system, the inventors confirmed that the position of a sound source can theoretically be distinguished with an angular resolution of up to about 5.831×10⁴ degrees (based on 44.1 kHz sample rate and 14 s/rev rotation speed) depending on the data acquisition frequency of the microphone and the rotation speed. In addition, the inventors confirmed that even in an environment where the sound pressure of noise and the sound source is the same, the positions of multiple sound sources can be identified with an accuracy of 90% or more.

### (Experiment 3) Experiment of tracking positions of multiple human voices for human-robot interaction

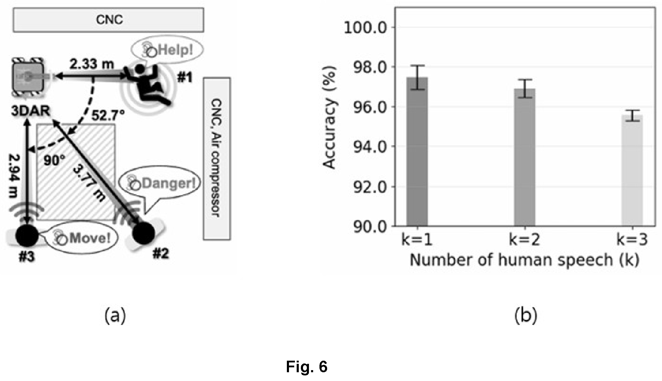

FIG. 6 shows experimental data applied to tracking positions of multiple human voices by using an acoustic directivity improvement system including a meta-structure according to one embodiment of the present invention. The experiment was conducted in a factory environment with machine tool noise and human noise. The positions of three persons were tracked when they spoke simultaneously, and referring to FIG. 6, it can be seen that accuracy of 95.6% or more was obtained.

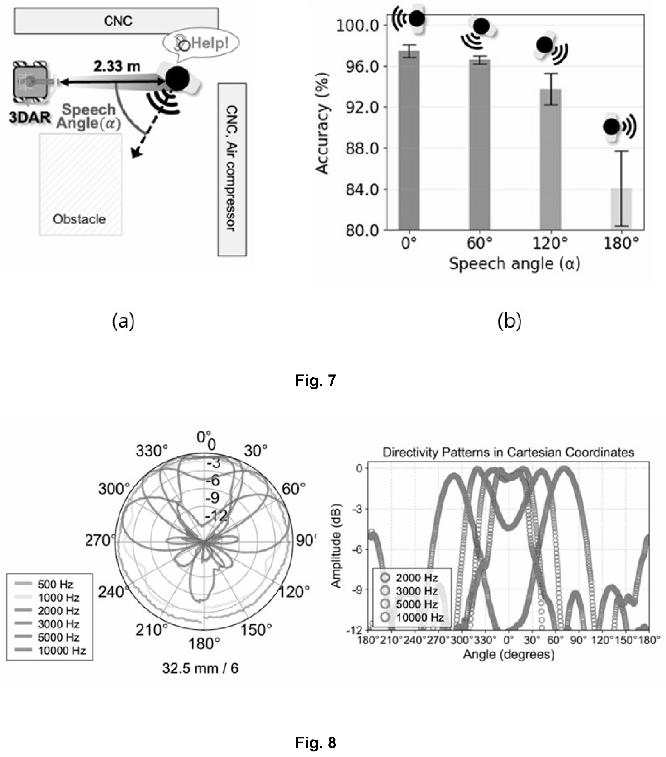

In addition, FIG. 7 shows experimental data according to angles of human voice by using an acoustic directivity improvement system including a meta-structure according to one embodiment of the present invention. Referring to the experimental data of FIG. 7, it can be seen that even when a person vocalizes not toward the acoustic sensor but toward a direction at an angle of 120°, a position tracking accuracy of 93.8% or more was obtained.

### (Experiment 4) Experiment of change in directivity direction according to frequency

The inventors of the present invention confirmed through experiment that the directivity direction changes according to frequency by using an acoustic directivity improvement system including a meta-structure according to one embodiment of the present invention.

In the experiment, a meta-structure having 6 slots, a slot interval of 33.53 mm, a tube diameter of 32.5 mm, and a tube length of 167.64 mm was used, and a microphone was used as the acoustic sensor. The microphone may be a commercial sensor.

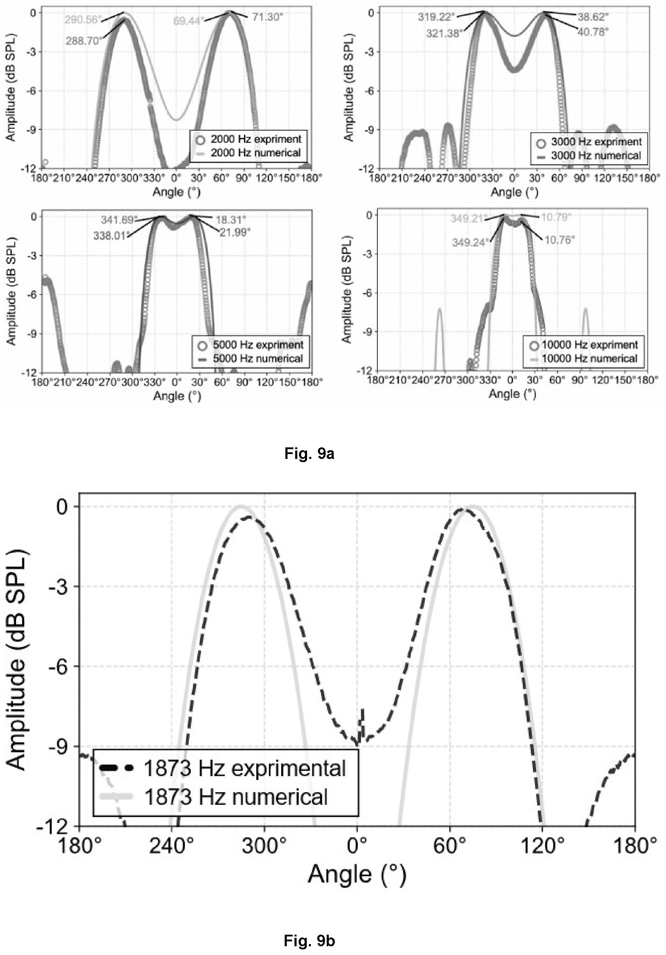

FIG. 8 is a diagram showing experimental directivity angle results measured for various frequencies, and FIG. 9 is a diagram showing theoretical directivity angles compared with the experimental results of FIG. 8.

Referring to FIGS. 8 and 9, it can be confirmed from the directivity patterns that the directivity direction changes depending on frequency from 2000 Hz to 10000 Hz. The directivity direction may mean the direction of the main lobe. The inventors of the present invention measured the directivity angle from the front of the tube based on the experimental results, and confirmed that the directivity angle was about 71° at 2000 Hz, about 41° at 3000 Hz, about 19° at 5000 Hz, and about 11° at 10000 Hz.

Through the high consistency of these two results, it is confirmed that, in actual application, sound sources can be accurately directed at preset angles without additional calibration processes.

### (Experiment 5) Hardware bandpass experiment

The inventors of the present invention conducted an experiment to confirm whether the directivity improvement system including the meta-structure according to one embodiment of the present invention can function as a hardware bandpass filter.

In the experiment, the presence or absence of the meta-structure and the presence or absence of 100 dB noise located at an angle of 30° were used as variables, and an experiment of receiving pure tones of target frequency bands was conducted. Thereafter, the normalized RMS value in the time domain of the received sound and the peak frequency magnitude processed by FFT (Fast Fourier Transform) in the frequency domain were compared. The target pure tone used was 2000 Hz, and the directivity angle of the system was set to 71°.

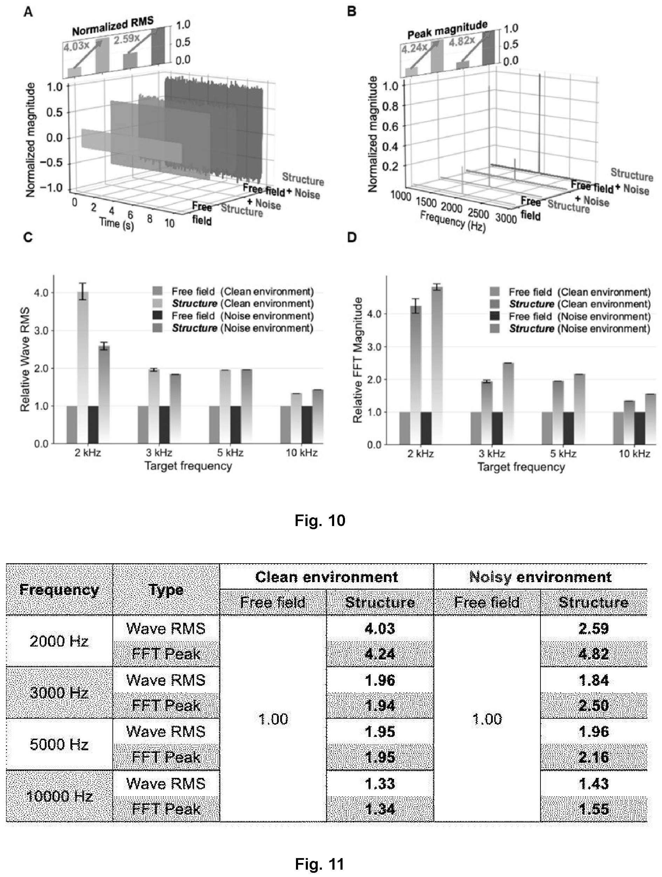

FIG. 10 is a diagram showing comparison results between the meta-structure based acoustic sensor according to the present invention and a sensor under free-field condition without the structure. The meta-structure was measured in a state rotated from the front of the tube to approximately 71° for 2000 Hz, 41° for 3000 Hz, 19° for 5000 Hz, and 11° for 10000 Hz to direct each frequency.

More specifically, FIG. 10A is a graph comparing normalized RMS (Root Mean Square) values of waveforms measured in noise-free and noisy environments for a 2 kHz pure-tone sound source, and showed 4.03 times higher reception improvement than free-field condition in a noise-free environment, and 2.59 times higher reception improvement than free-field condition in a noisy environment with a 100 dB noise source.

FIG. 10B shows comparison results of normalized FFT peak magnitudes measured under the same conditions, and the peak magnitude of 2000 Hz frequency was improved by 4.24 times in a noise-free environment compared with free-field condition, and by 4.82 times in a noisy environment with a 100 dB noise source compared with free-field condition.

FIG. 10C is a graph showing relative waveform RMS values of the structure compared with free-field for pure-tone sound sources of 2, 3, 5, and 10 kHz in clean and noisy environments, and FIG. 10D is a result showing relative FFT peak magnitudes measured under the same frequency conditions as FIG. 10C.

In addition, FIG. 11 is a table showing experimental results of applying the acoustic directivity improvement system including a meta-structure according to one embodiment of the present invention as a hardware bandpass filter.

Referring to FIGS. 10 and 11, in a noisy environment, a normalized RMS value of 2.59 times and a peak frequency magnitude of 4.82 times were confirmed for a 2 kHz sound source. This may mean that the system of the present invention can be applied as a hardware band filter.

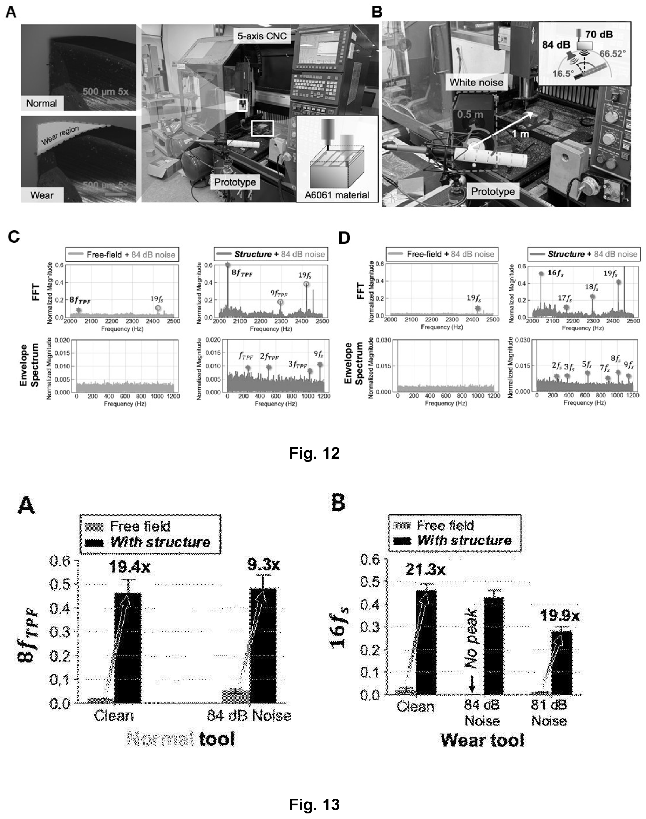

FIGS. 12 to 14 are embodiment images of various experiments performed by applying the acoustic directivity improvement system including a meta-structure according to one embodiment of the present invention to CNC tool failure monitoring hardware bandpass in a noisy factory environment.

FIG. 12A shows microscope photographs of a normal CNC tool and a worn tool. It is an experimental setup view of tool failure using face milling sound with the proposed structure targeting A6061 material in a factory. FIG. 12B is a detailed photograph of the experimental setup, in which the structure collects sound at a target tool normal and failure characteristic frequency (2041 Hz) at an angle of 66.52° in an 84 dB noise environment. FIG. 12C shows FFT and envelope spectrum analysis results, which indicate that, in the experiment using the structure, characteristic frequencies (8f_TPF, f_TPF) of a normal CNC tool were robustly collected even in a noisy environment. FIG. 12D shows FFT and envelope spectrum analysis results, which indicate that, in the experiment using the structure, characteristic frequencies (16f_s, f_s) of a worn CNC tool were robustly collected even in a noisy environment.

FIG. 13A shows comparison results of FFT characteristic frequency magnitudes for a normal tool, confirming that the characteristic frequency was improved by about 19.4 times in a quiet environment and by 9.3 times in a noisy environment. FIG. 13B shows comparison results of FFT characteristic frequency magnitudes for a worn tool, confirming that the characteristic frequency was improved by about 21.3 times in a quiet environment and by 19.9 times in an 81 dB noise environment. In particular, in an 84 dB noise environment, characteristic frequencies could be collected only when the structure was used.

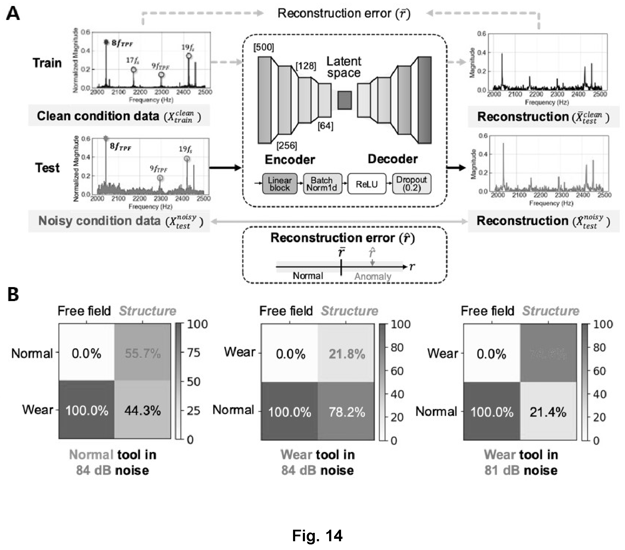

FIG. 14A is an image showing the application of the meta-structure as a hardware bandpass, and shows the architecture of an AE (autoencoder-decoder) model designed to confirm the degree of performance improvement of a tool condition diagnosis AI algorithm. FIG. 14B shows results of applying such a system, wherein (left figure) in an 84 dB noise environment, when the structure was not used, all normal tools were recognized as failed tools (characteristic frequencies not detected), but when the structure was used, about 55.7% of normal tools were correctly recognized. (Middle figure) In an 84 dB noise environment, when the structure was not used, all failed tools were recognized as normal tools (characteristic frequencies not detected), but when the structure was used, about 21.8% of failed tools were correctly recognized as failed. (Right figure) In an 81 dB noise environment, when the structure was used, 78.6% of failed tools were correctly recognized as failed. These results prove the hardware band filter performance of the structure, and demonstrate that it has a very significant effect on improving AI performance.

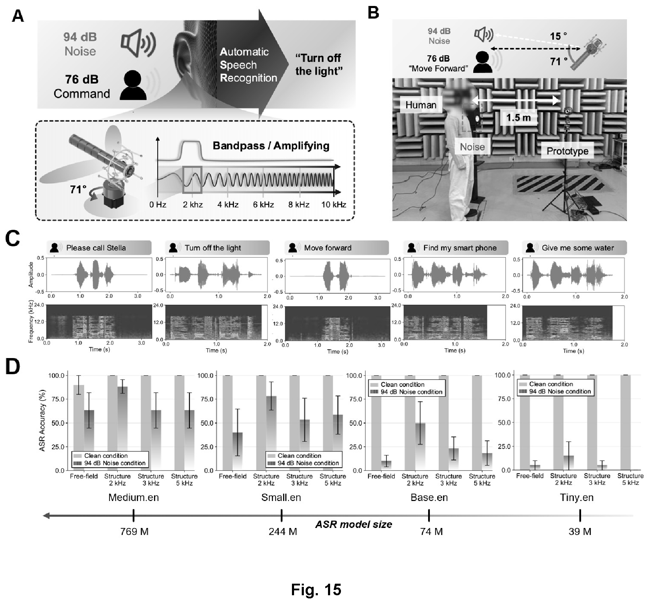

FIG. 15 is an embodiment image of various experiments performed by applying the acoustic directivity improvement system including a meta-structure according to one embodiment of the present invention as a hardware bandpass for human speech recognition for Human-Robot interaction and Human-Machine interaction in a noisy environment.

FIG. 15A is a diagram of an experiment of recognizing speech by an ASR (Automatic Speech Recognition) model after receiving 76 dB human command in a 94 dB noise environment through a hardware bandpass using the structure. FIG. 15B is a detailed photograph of the experimental setup, in which the structure records 76 dB human speech in an 84 dB noise environment and is rotated according to the target frequency (the figure shows that the structure is rotated 71° for 2 kHz band amplification/bandpass). FIG. 15C shows waveforms and spectrograms of everyday speech used in the experiment, and FIG. 15D is a graph showing ASR accuracy when various sizes of OpenAI Whisper models were used and the target frequency was changed.

In the experiments of FIGS. 15C and 15D:
1. In a 94 dB noise environment, when the structure was used to receive sound targeting 2 kHz and the largest model (Medium.en) was used for speech recognition, the highest accuracy of 88.3% was obtained (compared with free-field).
2. In a 94 dB noise environment, the speech recognition accuracy of a smaller model (with less computation and fewer parameters) using the structure was higher than the speech recognition accuracy of a larger model in free-field (without the structure).
   Through this, it was proven that the proposed structure, when applied as a hardware bandpass filter, can increase the accuracy of speech recognition, which is essential for HRI and HMI.

The above description is merely illustrative of the technical idea of the present invention, and those skilled in the art to which the present invention pertains can variously modify and change it without departing from the essential characteristics of the present invention. Therefore, the embodiments disclosed in the present invention are intended to illustrate the technical idea of the present invention and not to limit it, and the scope of the technical idea of the present invention is not limited by these embodiments. The scope of protection of the present invention shall be interpreted by the following claims, and all technical ideas within the equivalent scope thereof shall be interpreted as being included in the scope of rights of the present invention.

## Claims

1. A meta-structure for improving acoustic directivity, the meta-structure comprising:
a tubular structure having a hollow formed therein and having a length extending in one direction,
wherein the tubular structure is configured such that a slot is formed to be open toward the internal hollow and to be perpendicular to a longitudinal direction of the tubular structure.

2. The meta-structure for improving acoustic directivity according to claim 1, wherein the slots are formed in plurality with a pattern, and the plurality of slots have the same size and length.

3. The meta-structure for improving acoustic directivity according to claim 2, wherein the slots having the same size and length are formed in plurality on the same circumference of the tube.

4. The meta-structure for improving acoustic directivity according to claim 1, wherein the slots have a length of 3 to 10 times the width.

5. The meta-structure for improving acoustic directivity according to claim 1, wherein a diameter of the tube is 1.5 to 3 times a length of the slots.

6. The meta-structure for improving acoustic directivity according to claim 1, wherein the diameter of the tube is 28 to 36 mm, the number of the slots is 25 to 40, and an interval between the slots is 3 to 7 mm.

7. An acoustic directivity enhancement system including a meta-structure, the system comprising:
a tubular structure; and an acoustic sensor connected to the tubular structure, wherein the tubular structure has slots formed perpendicular to the longitudinal direction of the tubular structure and opened toward the internal hollow.

8. The acoustic directivity improvement system including a meta-structure according to claim 7, wherein the acoustic sensor is at least partially inserted into the inside of the tubular structure.

9. The acoustic directivity improvement system including a meta-structure according to claim 7, further comprising a rotation axis connected to the acoustic sensor, wherein the rotation axis is perpendicular to the longitudinal direction of the tubular structure, and the tubular structure is rotatable 360° about the rotation axis.

10. The acoustic directivity improvement system including a meta-structure according to claim 7, wherein the acoustic sensor comprises a single sensor.

11. The acoustic directivity improvement system including a meta-structure according to claim 7, wherein the system is replaceable with another tubular structure designed to have slots of a different pattern from a previously installed tubular structure.

12. The acoustic directivity improvement system including a meta-structure according to claim 11, wherein the tubular structure generates a phase cancellation effect in sound having a frequency of 2 kHz or higher.

13. An acoustic directivity improvement and direction estimation method comprising: rotating an acoustic sensor coupled to a tubular structure having slots formed therein about a rotation axis perpendicular to the longitudinal axis of the tubular structure; analyzing a specific frequency response received by the acoustic sensor according to rotation angles; and setting, in correspondence to the specific frequency, the rotation angle at which the frequency response is maximum as a directivity improvement angle, wherein the tubular structure having the slots formed therein is the meta-structure of claim 1.

14. The acoustic directivity improvement and direction estimation method according to claim 13, further comprising: arranging a tubular structure having slots formed at the directivity improvement angle and the acoustic sensor; and canceling and interfering frequencies other than the specific frequency by a phase cancellation mechanism.

15. The acoustic directivity improvement and direction estimation method according to claim 13, further comprising: estimating a position of a sound source by applying a signal processing algorithm to acoustic data received by the acoustic sensor according to rotation angles.

16. The acoustic directivity improvement and direction estimation method according to claim 15, wherein the acoustic data is human voice, and the signal processing algorithm is an automatic speech recognition (ASR) algorithm.

17. The acoustic directivity improvement and direction estimation method according to claim 15, wherein the signal processing algorithm comprises a pre-trained speech recognition model based on deep learning.
